# EUROPEAN PATENT APPLICATION

(11) **EP 1 549 065 A1**
(43) Date of publication of application: **29.06.2005**
(21) Application number: 03090454.4
(22) Date of filing: 22.12.2003
(51) Int. Cl.: H04N 7/01, H04N 5/253

(54) **Method and apparatus for selecting the replay mode for a picture sequence that is stored or recorded in a first format on a storage medium**

(71) Applicant: DEUTSCHE THOMSON-BRANDT GMBH, 78048 Villingen-Schwenningen (DE)
(72) Inventor: Winter, Marco, 30173 Hannover (DE); Schewzow, Andrej, 30163 Hannover (DE)
(74) Representative: Hartnack, Wolfgang, Dipl.-Ing.

(57) **Abstract**

The major TV systems in the world use interlaced scanning and either 50Hz field frequency or 60Hz field frequency, denoted 50i and 60i, respectively. However, movies are produced in 24Hz frame frequency and progressive scanning, denoted 24p. In order to broadcast movies as TV programs, in 60Hz countries a 3:2 pull-down is applied in which every 3rd field is repeated, and in 50Hz countries a movie is replayed or broadcast about 4% faster. In 24p digital format the video signal is encoded using MPEG. Because 24p-related originally compressed audio data streams cannot be decoded and replayed 4% faster without carrying out a pitch conversion consuming a significant amount of processor time, DVD Video discs sold in 50Hz countries contain audio data streams that are already encoded such that the DVD player's decoder 'automatically' outputs a 4% faster audio signal. When introducing HDTV digitally compressed movies on discs the movie producers would like to provide movie content only in 24p format worldwide. According to the invention, a related disc player offers at least three different replay modi to the user:
- 24p format with original video and audio replay speed;
- 60i format with original audio replay speed and 3:2 pull-down for video;
- 50i format with original audio replay speed and 24:1 pull-down for video.

## Description

The invention relates to a method and to an apparatus for selecting the replay mode for a picture sequence that is stored or recorded in a first format on a storage medium, whereby the replay format can be different from said first format, in particular for achieving 50Hz/625 lines and 60Hz/525 lines compatibility.

### Background

The major TV systems in the world use interlaced scanning and either 50Hz field frequency (e.g. in Europe and China for PAL and SECAM) or 60Hz field frequency (e.g. in USA and Japan for NTSC), denoted 50i and 60i, respectively. However, movies are produced in 24Hz frame frequency and progressive scanning, denoted 24p, which value when expressed in interlace format would correspond to 48i. In order to broadcast movies as TV programs, in 60Hz countries a 3:2 pull-down is applied in which every 3rd field is repeated, and in 50Hz countries a movie is replayed or broadcast about 4% faster. In 24p digital format (e.g. for HDTV movie disc in 24sf format, or DVD) the video signal is encoded using MPEG. Because 24p-related originally compressed audio data streams cannot be decoded and replayed 4% faster without carrying out a process consuming a significant amount of processor time for decoding, re-sampling e.g. by pitch conversion, and re-encoding for external decoders, and because of additional license fees and additional chip space for implementing audio compression encoders, e.g. DVD Video discs sold in 50Hz countries contain audio data streams that are already encoded such that the DVD player's decoder 'automatically' outputs a 4% faster audio signal.

### Invention

When introducing HDTV digitally compressed movies on discs the movie producers would like to provide movie content only in 24p format worldwide. In particular with HDTV picture content discs it is desirable for distribution in 50i countries to replay movies with original speed according to the 24p format. This means that the original 24p content is played back with quasi 25p (i.e. 50i) output on 50i non-HDTV players, whereby the audio should be presented 4.2 % faster. Conventional DVD players provide compressed multi-channel audio to external decoders, but such decoders are not able to replay the audio channels 4.2 % faster because this value is outside the SPDIF specification to which the digital output of DVD players conforms usually. Therefore, the audio streams recorded on the disc should be already pitch converted.

A problem to be solved by the invention is to avoid necessity for 24p format (HDTV) movies that are provided with two different audio signal speeds, and to allow 24p format presentation without leaving compatibility to the existing 50i format consumer (display) devices. This problem is solved by the method disclosed in claim 1. An apparatus that utilises this method is disclosed in claim 5.

According to the invention, the MPEG Video stream is recorded on the disc or on the storage medium in the original 24p format. The audio data streams (e.g. with MPEG Audio, AC-3 or DTS compression) stored on the disc represent the original speed or pitch. The standardised MPEG 3:2 pull-down flag is included in the datastream, however, succeeding 3:2 pull-down flags are ignored by the decoder except such 3:2 pull-down flags based on which a 24:1 pull-down can be carried out. This has the advantage that when performing the 24:1 pull-down the correct field of a current frame is repeated so that unnecessary strong motion judder is avoided, which is in particular useful for streams like 24sf.
A full-featured disc player or disc recorder offers at least three different replay modi to the user:
A) 24p format with original video and audio replay speed;
B) 60i format with original audio replay speed and 3:2 pull-down for video;
C) 50i format with original audio replay speed and 24:1 pull-down for video.
Advantageously, if the player facilitates these replay modi, 24p discs can be presented on any TV set in all 50i countries. Version A is the preferred one (e.g. for 24p, 48p, 48i and 96i compatible/featured displays), version B corresponds to a preferred fall-back solution in case the display or the TV receiver can not present a 24p-based format but can present a 60i-based format, and version C corresponds to a further fall-back solution operating with any 50i-based TV receiver or display, providing, however, a picture quality inferior to that of version B.
An additional solution can be provided by high-end players, which include automatic audio pitch conversion to support a 4.2 % faster playback of the 24p content for 50i output, i.e. without using any pull-down.

Advantageously, the inventive solution is compatible to latest display types (24p compatible) and the related discs are playable for even the simplest and oldest TV sets. It is a minor effort only for constructing appropriate players. It is very simple to encode the movies, i.e. the picture content, in an appropriate manner. It is a cheap and powerful and consumer friendly solution, in particular for introducing HDTV (DVD) discs or other storage media.

In principle, the inventive method is suited for selecting the replay mode for a picture sequence that is stored or recorded in a first format on a storage medium, e.g. an optical disc or harddisk, which first format includes a given frame frequency of essentially 24Hz, said method including the steps:
- Evaluating feature data in order to determine which video data format and/or video data presentation speed, or additionally which audio data presentation speed, related to the content of said feature data is to be presented upon replay of said storage medium, whereby the presented video data format or the presentation speed can be different from the original video data format, or presentation speed, related to said first format picture sequence;
If the content of said feature data refers to said original video data format and audio replay speed, presenting the video data or additionally the audio data of said picture sequence in said original video data format and audio replay speed, thereby ignoring 3:2 pull-down flags included in the data stream for said picture sequence;
If the content of said feature data refers to essentially 60Hz interlace video data format, presenting the video data of said picture sequence in said 60Hz interlace video data format or additionally presenting the audio data in said original audio data replay speed, thereby using 3:2 pull-down flags included in the data stream for said picture sequence for repeating related fields of said video data;
If the content of said feature data refers to essentially 50Hz interlace or 25Hz progressive video data format, presenting the video data of said picture sequence in said 50Hz interlace or 25Hz progressive, respectively, video data format or additionally presenting the audio data in said original audio data replay speed, thereby not repeating related fields of said video data according to said 3:2 pull-down flags included in the data stream for said picture sequence, but instead repeating fields or frames, respectively, based on automatically generated 24:1 pull-down flags or on skipping corresponding ones of said 3:2 pull-down flags resulting in 24:1 pull-down.
In principle the inventive apparatus, e.g. an optical disc player or an optical disc recorder, is suited for selecting the replay mode for a picture sequence that is stored or recorded in a first format on a storage medium, e.g. an optical disc, which first format includes a given frame frequency of essentially 24Hz, said apparatus including:
- Means for Evaluating feature data in order to determine which video data format and/or video data presentation speed, or additionally which audio data presentation speed, related to the content of said feature data is to be presented upon replay of said storage medium, whereby the presented video data format or the presentation speed can be different from the original video data format, or presentation speed, related to said first format picture sequence;
- Presentation means which,
if the content of said feature data refers to said original video data format and audio replay speed, present the video data or additionally the audio data of said picture sequence in said original video data format and audio replay speed, thereby ignoring 3:2 pull-down flags included in the data stream for said picture sequence;
if the content of said feature data refers to essentially 60Hz interlace video data format, present the video data of said picture sequence in said 60Hz interlace video data format or additionally present the audio data in said original audio data replay speed, thereby using 3:2 pull-down flags included in the data stream for said picture sequence for repeating related fields of said video data;
if the content of said feature data refers to essentially 50Hz interlace or 25Hz progressive video data format, present the video data of said picture sequence in said 50Hz interlace or 25Hz progressive, respectively, video data format or additionally present the audio data in said original audio data replay speed, which presentation means thereby not repeat related fields of said video data according to said 3:2 pull-down flags included in the data stream for said picture sequence, but instead repeat fields or frames, respectively, based on automatically generated 24:1 pull-down flags or on skipping corresponding ones of said 3:2 pull-down flags resulting in 24:1 pull-down.

Advantageous additional embodiments of the invention are disclosed in the respective dependent claims.

### Drawings

Exemplary embodiments of the invention are described with reference to the accompanying drawings, which show in:
- Fig. 1: Flow chart for the inventive selection of the display modus;
- Fig. 2: Application of 3:2 pull-down on a 24p source picture sequence to provide a 60i picture sequence;
- Fig. 3: Depicted relation between real time and 'movie time';
- Fig. 4: Percepted time difference for various replay modes, the frames starting with a top field;
- Fig. 5: Schematic representation for temporal behaviour in different versions of 24:1 pull-down on a 24p input picture sequence;
- Fig. 6: Depicted percepted temporal mis-adjustment in different versions of 24:1 pull-down on a 24p input picture sequence;
- Fig. 7: Schematic representation for temporal behaviour in different versions of 24:1 pull-down on a 48i input picture sequence;
- Fig. 8: Depicted percepted temporal mis-adjustment in different versions of 24:1 pull-down on a 48i input picture sequence;
- Fig. 9: Simplified block diagram of an inventive disc player;
- Fig. 10: Percepted time difference for various replay modes, the frames starting with a bottom field.

### Exemplary embodiments

According to the invention the MPEG video stream is recorded on the storage medium in the original 24p format, whereby the MPEG video stream 3:2 pull-down flag is also contained in the recording so as to facilitate 3:2 pull-down playback processing. All audio streams (compressed ones and uncompressed ones) recorded on the disc are encoded corresponding to the original speed or pitch. The above-mentioned replay modi are explained in more detail below:
*A) 24p format for video and original audio replay speed* Depending on the type of display the recorded 24p format can be presented either in 24p format (e.g. on an LCD display) or in 48p format (simple frame repeat) or in 72p format (3-fold frame repeat) or 48i or 96i. Because the 3:2 pull-down flags are set in the stream they must normally be ignored by the decoder, i.e. the MPEG Video decoder must be set to a mode forcing it to ignore the pull-down flags. Audio is replayed or presented with the original speed or pitch. Mode A is the preferred output mode because it guarantees the optimum replay or presentation quality: original-quality video and audio without strong motion judder resulting from 3:2 pull-down.
A1) Only for expensive displays/TVs or for embedded amplifiers (without digital audio output): audio is internally pitch converted and fed to an internal amplifier and/or is re-compressed and fed to a corresponding internal or external audio decoder. This audio conversion reduces the pitch level by about 4%. This mode is the preferred fallback solution in case the display driven does neither support a multiple of 24p nor a multiple of 48i. The video presentation will be carried out 4.2% faster in 50i format, i.e. the movie will be shown with a 4.2% shorter presentation period. Every TV set in a 50i country should be able to present such a player output. However, the pitch conversion is costly and can not be implemented in standard players.

### B) 60i format with original audio replay speed and 3:2 pull-down for video

A 3:2 pull-down is carried out for which the pull-down flags in the MPEG stream are used. Audio is replayed in the original speed. Mode B is the preferred fallback mode and is used if the TV receiver or the display can not present corresponding to mode A, but can present in 60i format, and in case no pitch conversion is feasible (because this feature is not implemented in the player). However, the presentation quality is inferior to that of 24p due to the 3:2 pull-down motion artefacts (motion judder).

### C) 50i format with original audio replay speed and 24:1 pull-down for video

This is the presentation mode selected in case the connected display or TV set can neither present in mode A nor in mode B. Every 50i TV set can present in this format, but the resulting picture quality has the lowest level among the four modes due to clearly visible motion artefacts. Since the MPEG stream pull-down flags were generated at encoder side for 3:2 pull-down at decoder side, these flags are unsuitable for implementing mode C. Therefore the pull-down flags are ignored or skipped such that a 24:1 pull-down is resulting. 24:1 pull-down flags, which are required instead, are generated automatically in the decoder or DVD player. If the source picture content type was 'interlaced' (camera source) every 24 frames one frame is repeated. If the source picture content type was 'progressive' (film source) every 12 frames one field is repeated. Whether the original content type was 'progressive' (24p) or 'interlaced' (48i) can be derived from information items outside the MPEG data stream, e.g. from DVD IFO files, or can be derived from an investigation of the MPEG data stream in particular by checking whether for every third field a 3:2 pull-down flag occurs in the stream. If the pull-down flag occurs regularly it is assumed that the content type was 'interlaced', if not it is assumed that the content type was 'progressive'. The check for the presence or absence of 3:2 pull-down flags and the corresponding insertion or non-insertion of fields can be performed automatically in the MPEG Video decoder or DVD player while decoding.

Advantageously, a (DVD) player or a decoder including presentation modes A+B+C, or modes A+A1 (and eventually B+C), can be used for presenting a 24p format disc on any TV set in any 50i region or country.

In Fig. 9 a pick-up and error correction stage PEC reads a 24p format encoded video and audio signal from a disc D. The output signal passes through a track buffer and de-multiplexer stage TBM to a video decoder VDEC and an audio decoder ADEC, respectively. A controller CTRL can control PEC, TBM, VDEC and ADEC. A user interface UI and/or an interface IF between a TV receiver or a display (not depicted) and the disc player are used to switch the player to one of the modes A, A1, B or C. The interface IF may check automatically which mode or modes the TV receiver or a display can process and present. The replay mode information is derived automatically from feature data (i.e. data about which display mode is available in the TV receiver or the display) received by interface IF that is connected by wire, by radio waves or optically to the TV receiver or the display device. The feature data can be received regularly by said interface IF, or upon sending a corresponding request to said TV receiver or a display device. As an alternative, the replay mode information is input by the user interface UI upon displaying a corresponding request for a user.

In mode A, video decoder VDEC and audio decoder ADEC operate in their normal way and produce output signals related to the 24p, 48p, 72p, 48i or 96i format, whereby video decoder VDEC and/or CTRL ignore the 3:2 pull-down flags.
In mode A1, video decoder VDEC produces output signals in 50i format and audio decoder ADEC can perform a corresponding pitch conversion.
In mode B, video decoder VDEC carries out a 3:2 pull-down, thereby evaluating the pull-down flags in the MPEG stream. Audio decoder ADEC replays the audio signals in the original speed.
In mode C, the 3:2 pull-down flags are ignored by video decoder VDEC. Instead, it automatically generates 24:1 pull-down flags. If the source picture content type was 'interlaced', every 24 frames one frame is repeated. If the source picture content type was 'progressive' (24p), every 12 frames one field is repeated. Whether the original content type was 'progressive' (24p) or 'interlaced' (48i) is derived in video decoder VDEC or in controller CTRL from DVD IFO files, or by checking whether for every third field a 3:2 pull-down flag occurs in the MPEG data stream whereby, if the 3:2 pull-down flag occurs regularly the content type is dealt with as 'interlaced', and if not it is dealt with as 'progressive'. Audio decoder ADEC presents decoded audio signals with original audio replay speed.

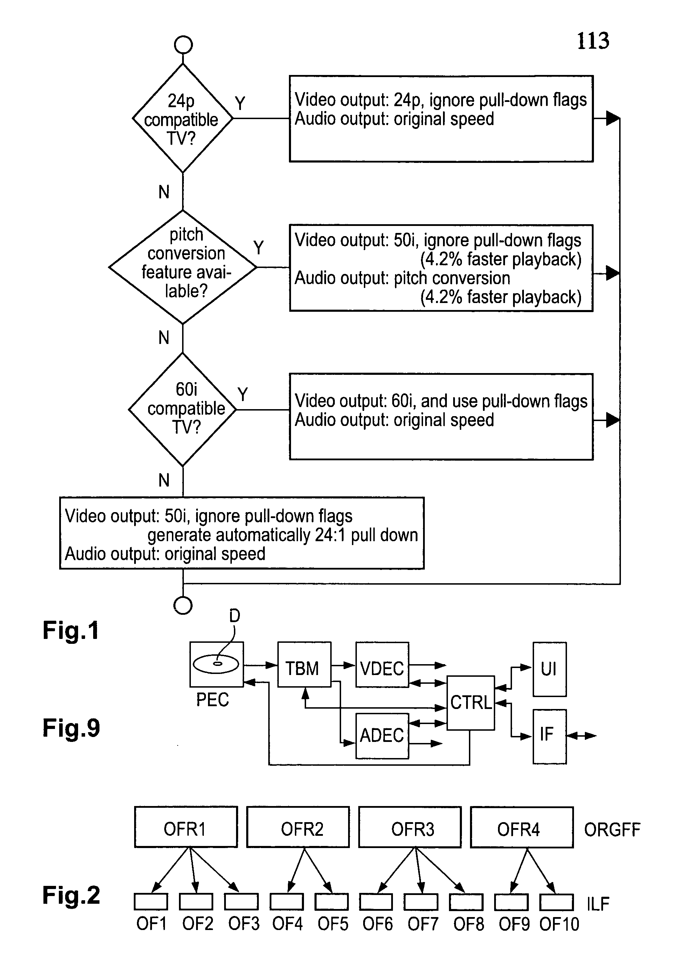

In the flow chart of Fig. 1 it is first checked whether a 24p compatible TV or display is connected to the disc player. If true, the video and audio output occurs according to mode A. If not true, it is checked whether a suitable pitch conversion feature is available in the disc player. If true, the video and audio output occurs according to mode A1. If not true, it is checked whether 60i compatible TV or display is connected to the disc player. If true, the video and audio output occurs according to mode B. If not true, the video and audio output occurs according to mode C.

In Fig. 2 interlaced fields ILF are derived from original film frames ORGFF. From a first original film frame OFR1 three output fields OF1 to OF3 are generated, and from a third original film frame OFR3 three output fields OF6 to OF8 are generated. From a second original film frame OFR2 two output fields OF4 and OF5 are generated, and from a fourth original film frame OFR4 two output fields OF9 and OF10 are generated, and so on.

In MPEG (MPEG2, MPEG4, JVT) the progressive-source frames can be field encoded, e.g. in 24sf format. A frame always starts with a 'first' field, which is followed by a 'second' field. However, the first field can be either a top field including lines 1, 3, 5, ..., or a bottom field including lines 2, 4, 6, ..., whereby line '1' is the top most line of the frame. If the first field in a frame is a top field, the second field in that frame is a bottom field. If the first field in a frame is a bottom field, the second field in that frame is a top field.

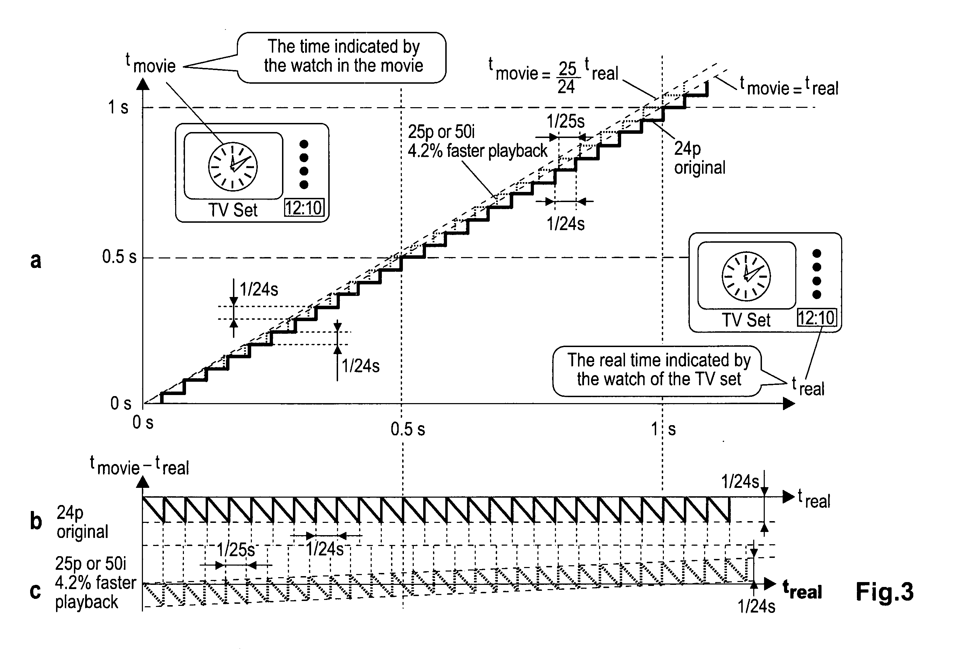

Fig. 3a explains the meaning of figures 3b to 8 and 10. The horizontal axis shows the real time tᵣₑₐₗ whereas the vertical axis shows the 'movie time' tₘₒᵥᵢₑ, which both times are expressed in seconds. However, the real time runs continuously but the 'movie time' runs discontinuously due to each frame being scanned at a different time instant, i.e. while the real time runs continuously during a frame or field or picture of the movie, the content of the current frame or field or picture of the movie will not change or run. The result is a staircase function of the relation of both types of times.
Fig. 3b shows the time difference (tₘₒᵥᵢₑ-tᵣₑₐₗ) for the original 24p format. Fig. 3c shows the time difference (tₘₒᵥᵢₑ-tᵣₑₐₗ) for a replay of original 24p format in 25p or 50i format. Because the speed is different the average time difference (tₘₒᵥᵢₑ-tᵣₑₐₗ) increases over time.

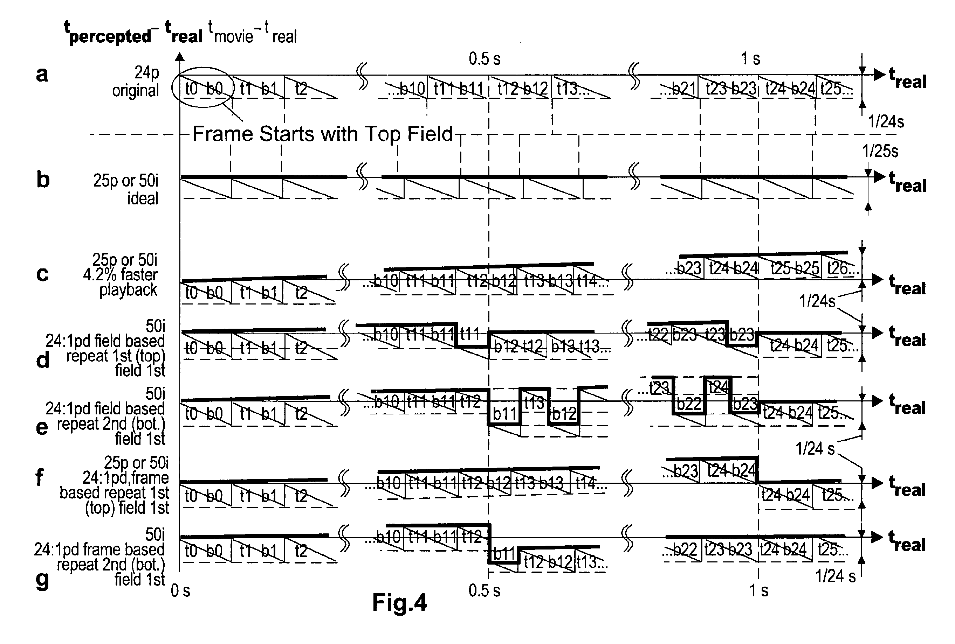

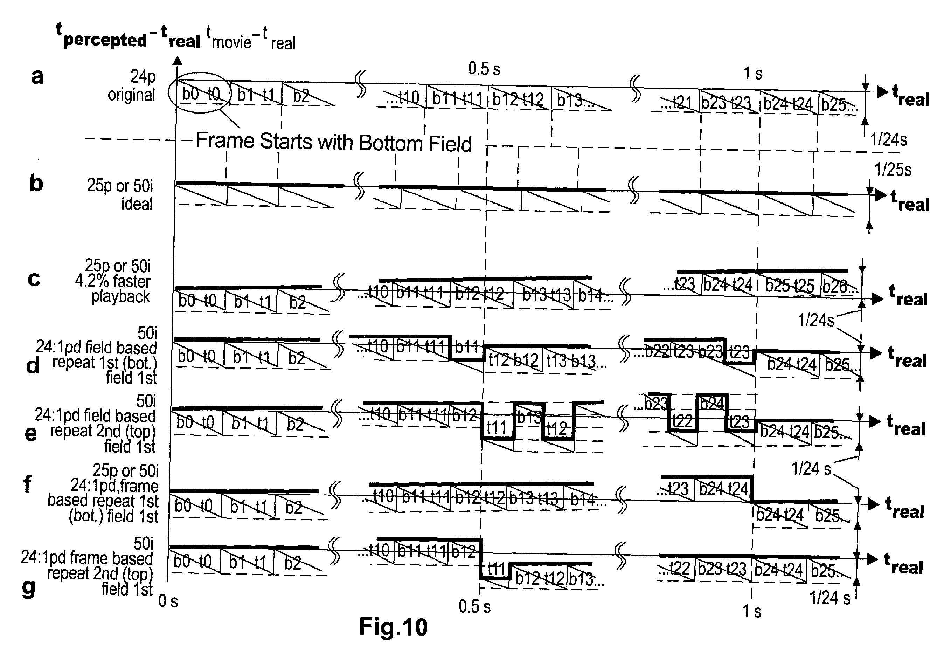

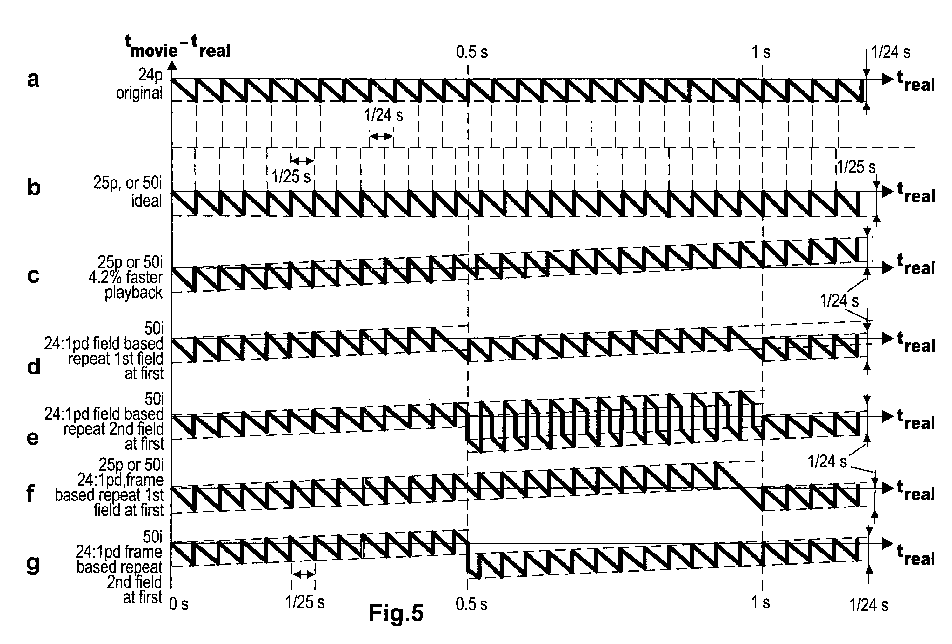

Fig. 5a to 5g relates to Fig. 4a to 4g, respectively, and to Fig. 10a to 10g, respectively.

In Fig. 4 the bold lines show the percepted time differences (t_{percepted}-tᵣₑₐₗ) whereas the thin lines show the time difference (tₘₒᵥᵢₑ-tᵣₑₐₗ)- The percepted time difference can be regarded as representing a local (shifted) average of the time difference (tₘₒᵥᵢₑ-tᵣₑₐₗ). In Fig. 4a, part of 25 original film frames having fields t0, b0, t1, ..., t24, b24 having 24p format are depicted. 't0' is the first top field and 'b0' is the first bottom field of the original 24p video stream. 24 frames cover a time period of 1 second. E.g. "t1" denotes the top field for frame No. 1, which is in Fig. 4 the first field of frame No. 1. E.g. "b3" denotes the bottom field for frame No. 3, which is in Fig. 4 the second field of frame No. 3. The original frames start with a top field. Fig. 4b shows a desired or ideal percepted time difference (t_{percepted}-tᵣₑₐₗ) for 25p or 50i format replay of a 24p format picture sequence, whereas Fig. 4c to 4g show the actually or really percepted time difference and Fig. 4d to 4g show replay solutions for a long-term average of zero for the percepted time difference.
Fig. 4c shows the percepted time difference for a 4.2% faster playback in 25p or 50i format, i.e. within 1 second the 50 fields t0 to b24 are replayed.
In order to achieve an original-speed video playback, in figures 4d to 4g a 24:1 pull-down is used. In Fig. 4d (field based 50i format) the top field t11 of frame 11 is repeated at the first, or odd, 24:1 field pull-down and the bottom field b23 of frame 23 is repeated at the second, or even, 24:1 field pull-down, i.e. inserted field t11 follows original field b11 and inserted field b23 follows original field t23. Due to interlace, top and bottom fields must be arranged alternatingly.
In Fig. 4e (field based 50i format) the bottom field b11 of frame 11 is repeated at the first, or odd, 24:1 field pull-down and the top field t24 of frame 24 is repeated at the second, or even, 24:1 field pull-down, i.e. inserted field b11 follows original field t12 and inserted field t24 follows original field b23. Due to interlace, top and bottom fields must be arranged alternatingly.
In Fig. 4f (field based 50i format or frame based 25p format) the fields t24 and b24 of frame 24 are repeated at the 24:1 frame pull-down at time instant '1 second'. Again, top and bottom fields are arranged alternatingly.
In Fig. 4g (field based 50i format) the top field t12 of frame 12 and the bottom field b11 of frame 11 are repeated at the 24:1 frame pull-down at time instant '0.5 second'. Again, top and bottom fields are arranged alternatingly.
In general one is free to repeat either the top field first or the bottom field first at the 3:2 pull-down. It appears, however, that in Fig. 3d and in Fig. 3f the percepted time difference caused by the 24:1 field or frame pull-down, respectively, is smaller than in Fig. 3e and in Fig. 3g.

Fig. 10a to 10g is similar to Fig. 4a to 4g, respectively, but in Fig. 10a to 10g the original frames start with a bottom field.

Fig. 5a shows the time difference (tₘₒᵥᵢₑ-tᵣₑₐₗ) as contained on the optical disc or any other storage medium, whereas figures 5c to 5g show the time difference (tₘₒᵥᵢₑ-tᵣₑₐₗ) at the output of video decoder VDEC. Fig. 5b depicts the time difference (tₘₒᵥᵢₑ-tᵣₑₐₗ) for an optimum output video decoder VDEC for comparison.
Fig. 5c is related to Fig. 4c and Fig. 10c and shows the time difference (tₘₒᵥᵢₑ-tᵣₑₐₗ) for a replay of original 24p format in 25p or 50i format without any pull-down.

Fig. 5d is related to Fig. 4d and Fig. 10d and shows the time difference (tₘₒᵥᵢₑ-tᵣₑₐₗ) for a replay of original 24p format in 50i format including field based 24:1 pull-down, the pull-down repeating the corresponding top field at first.
Fig. 5e is related to Fig. 4e and Fig. 10e and shows the time difference (tₘₒᵥᵢₑ-tᵣₑₐₗ) for a replay of original 24p format in 50i format including field based 24:1 pull-down, the pull-down repeating the corresponding bottom field at first. In comparison with Fig. 5d it appears that the maximum time difference and thereby the perceived motion judder is greater. The implementation according to Fig. 5d is the preferred one for mode C of the invention.
Fig. 5f is related to Fig. 4f and Fig. 10f and shows the time difference (tₘₒᵥᵢₑ-tᵣₑₐₗ) for a replay of original 24p format in 25p or 50i format including frame based 24:1 pull-down, the pull-down repeating the corresponding frame with top field at first.
Fig. 5g is related to Fig. 4g and Fig. 10g and shows the time difference (tₘₒᵥᵢₑ-tᵣₑₐₗ) for a replay of original 24p format in 25p or 50i format including frame based 24:1 pull-down, the pull-down repeating the corresponding frame with bottom field at first. In comparison with Fig. 5f it appears that the maximum time difference and thereby the perceived motion judder is greater.

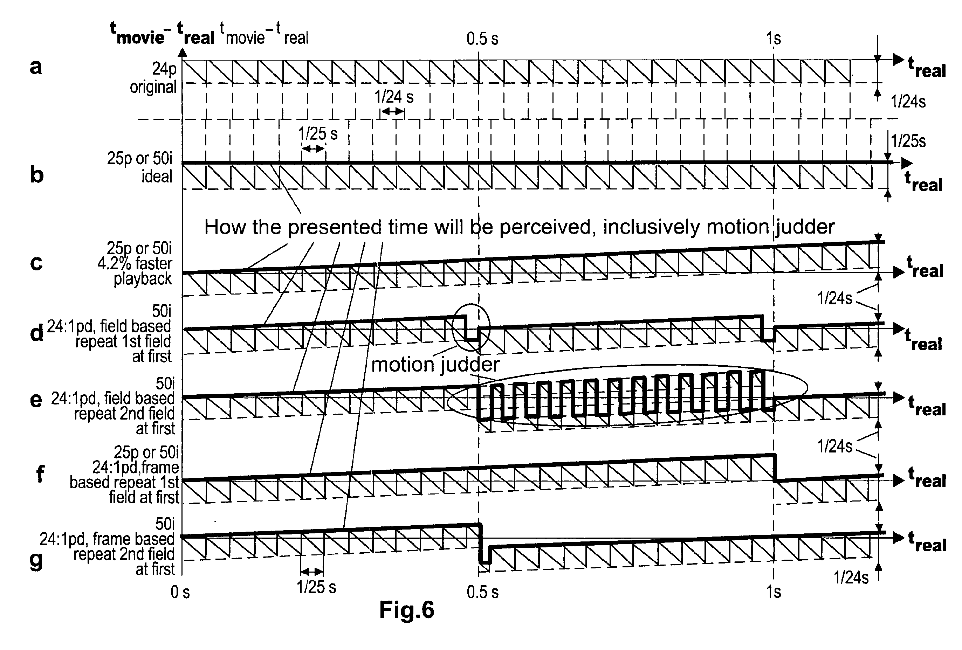

Fig. 6 depicts the percepted temporal mis-adjustment in different versions of 24:1 pull-down replay of a 24p input picture sequence, corresponding to Fig. 4 and Fig. 10, but wherein the percepted time difference (t_{percepted}-tᵣₑₐₗ) for every frame or field is shown.

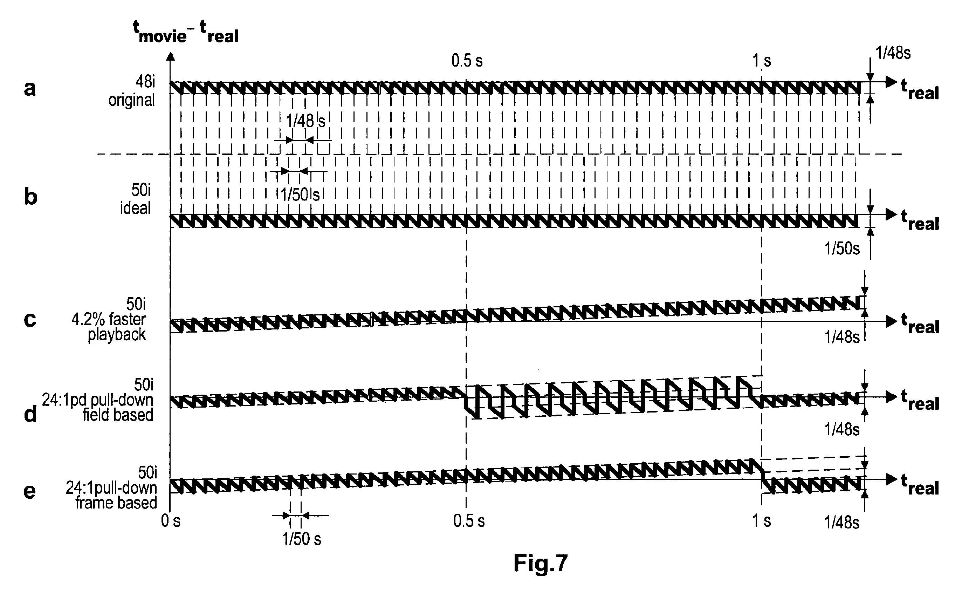

Fig. 7 shows, in the manner of Fig. 5, the time differences (tₘₒᵥᵢₑ-tᵣₑₐₗ) in case of original 48i format recorded or stored on the storage medium. Fig. 7d shows the replay with 50i format and 24:1 field based pull-down, whereas Fig. 7e shows the replay with 50i format and 24:1 frame based pull-down. The implementation according to Fig. 7e is the preferred one for mode C of the invention because the maximum amplitude (tₘₒᵥᵢₑ-tᵣₑₐₗ) and thereby the perceived motion judder is smallest.

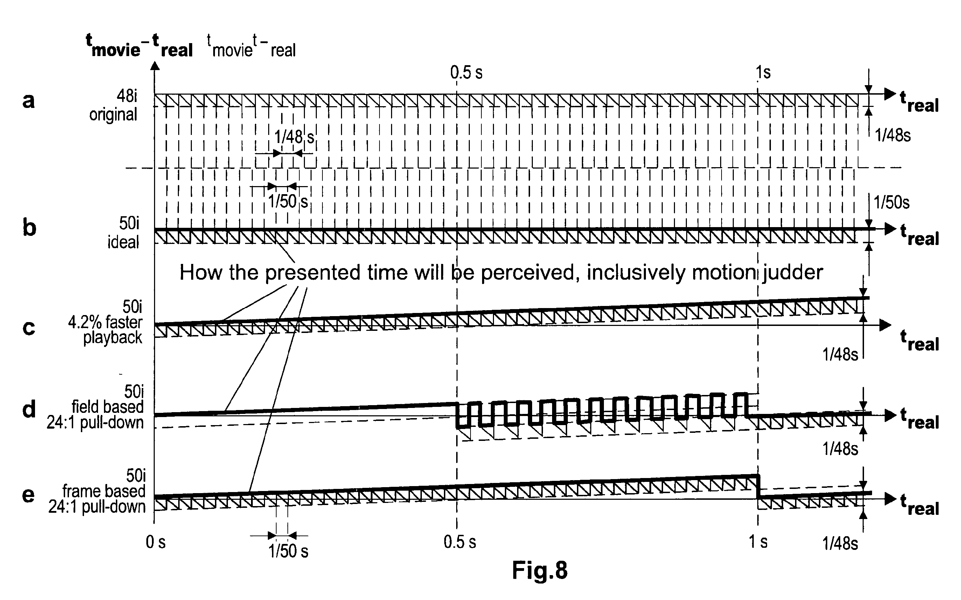

Fig. 8c to 8e depict the percepted temporal mis-adjustment - i.e. the percepted time difference (t_{percepted}-tᵣₑₐₗ) - in different versions of 24:1 pull-down on a 48i input picture sequence, according to Fig. 7c to 7e, respectively.
The average of the percepted line graphs in figures 4, 10, 6 and 8 does not correspond with the average of the 24p/48i original stream. Therefore, the average of the percepted line graph should not be used as direct reference to the audio synchronisation because of the delay.

The invention is particularly advantageous for the introduction of HDTV discs in Europe because such discs can be replayed with original speed and pitch, contrary to current movies on DVD and (encoded) VHS which can be replayed 4% faster only with a corresponding increased pitch. A near-original presentation in connection with next-generation displays (HDTV) can be introduced on the market, thereby keeping backwards compatibility with respect to existing TV sets.

The invention is applicable for all present and future storage medium-oriented systems like HD-DVD and Blu-ray and harddisk recorder, e.g. an HDD recorder or a PC.

## Claims

1. Method for selecting (CTRL) the replay (VDEC) mode for a picture sequence that is stored or recorded in a first format (24p) on a storage medium (D), e.g. an optical disc or harddisk, which first format includes a given frame frequency of essentially 24Hz, **characterised by** the steps:
- Evaluating (CTRL) feature data (UI, IF) in order to determine which video data format (24p, 25p, 50i) and/or video data presentation speed, or additionally which audio data presentation speed, related to the content of said feature data is to be presented upon replay of said storage medium (D), whereby the presented video data format or the presentation speed can be different from the original video data format, or presentation speed, related to said first format (24p) picture sequence;
- If the content of said feature data refers to said original video data format and audio replay speed, presenting (VDEC, ADEC) the video data or additionally the audio data of said picture sequence in said original video data format and audio replay speed, thereby ignoring 3:2 pull-down flags included in the data stream for said picture sequence;
- If the content of said feature data refers to essentially 60Hz interlace video data format, presenting (VDEC, ADEC) the video data of said picture sequence in said 60Hz interlace video data format or additionally presenting the audio data in said original audio data replay speed, thereby using 3:2 pull-down flags included in the data stream for said picture sequence for repeating related fields of said video data;
- If the content of said feature data refers to essentially 50Hz interlace or 25Hz progressive video data format, presenting (VDEC, ADEC) the video data of said picture sequence in said 50Hz interlace or 25Hz progressive, respectively, video data format or additionally presenting the audio data in said original audio data replay speed, thereby not repeating related fields of said video data according to said 3:2 pull-down flags included in the data stream for said picture sequence, but instead repeating fields or frames, respectively, based on automatically generated 24:1 pull-down flags or on skipping corresponding ones of said 3:2 pull-down flags resulting in 24:1 pull-down.

2. Method according to claim 1 wherein, if the content of said feature data refers to essentially 50Hz interlace video data format and an audio re-sampling - e.g. a pitch conversion function - is available, presenting (VDEC, ADEC) the video data of said picture sequence in said 50Hz interlace video data format without using said 3:2 pull-down flags and without repeating corresponding fields, and presenting the audio data with a speed that is by a ratio of essentially 25/24 faster than said original audio data replay speed, thereby using said audio re-sampling.

3. Method according to claim 1 or 2, wherein said replay mode information is derived automatically from feature data received by an interface (IF) that is connected or related to a TV receiver or a display device.

4. Method according to claim 3, wherein said feature data are received by said interface (IF) upon sending a corresponding request to said TV receiver or a display device.

5. Apparatus for selecting (CTRL) the replay (VDEC) mode for a picture sequence that is stored or recorded in a first format (24p) on a storage medium (D), e.g. an optical disc, which first format includes a given frame frequency of essentially 24Hz, said apparatus including:
- Means for Evaluating (CTRL) feature data (UI, IF) in order to determine which video data format (24p, 25p, 50i) and/or video data presentation speed, or additionally which audio data presentation speed, related to the content of said feature data is to be presented upon replay of said storage medium (D), whereby the presented video data format or the presentation speed can be different from the original video data format, or presentation speed, related to said first format (24p) picture sequence;
- Presentation means (VDEC, ADEC) which,
if the content of said feature data refers to said original video data format and audio replay speed, present the video data or additionally the audio data of said picture sequence in said original video data format and audio replay speed, thereby ignoring 3:2 pull-down flags included in the data stream for said picture sequence;
- if the content of said feature data refers to essentially 60Hz interlace video data format, present the video data of said picture sequence in said 60Hz interlace video data format or additionally present the audio data in said original audio data replay speed, thereby using 3:2 pull-down flags included in the data stream for said picture sequence for repeating related fields of said video data;
- if the content of said feature data refers to essentially 50Hz interlace or 25Hz progressive video data format, present the video data of said picture sequence in said 50Hz interlace or 25Hz progressive, respectively, video data format or additionally present the audio data in said original audio data replay speed, which presentation means (VDEC, ADEC) thereby not repeat related fields of said video data according to said 3:2 pull-down flags included in the data stream for said picture sequence, but instead repeat fields or frames, respectively, based on automatically generated 24:1 pull-down flags or on skipping corresponding ones of said 3:2 pull-down flags resulting in 24:1 pull-down.

6. Apparatus according to claim 5 wherein, if the content of said feature data refers to essentially 50Hz interlace video data format and means for an audio re-sampling - e.g. a pitch conversion - are present, said presenting means (VDEC, ADEC) present the video data of said picture sequence in said 50Hz interlace video data format without using said 3:2 pull-down flags and without repeating corresponding fields, and present the audio data with a speed that is by a ratio of essentially 25/24 faster than said original audio data replay speed, thereby using said audio re-sampling means.

7. Apparatus according to claim 5 or 6, said apparatus being an optical disc player or an optical disc recorder, or a harddisk recorder, e.g. an HDD recorder or a PC.

8. Apparatus according to one of claims 5 to 7, wherein said replay mode information is derived automatically from feature data received by an interface (IF) that is connected or related to a TV receiver or a display device.

9. Apparatus according to claim 8, wherein said feature data are received by said interface (IF) upon sending a corresponding request to said TV receiver or a display device.

10. Method according to claim 1 or 2 or apparatus according to one of claims 5 to 7, wherein said replay mode information is input by a user interface (UI) upon displaying a corresponding request for a user.
